# EUROPÄISCHE PATENTSCHRIFT

(11) **EP 1 310 781 B1**
(45) Veröffentlichungstag und Bekanntmachung des Hinweises auf die Patenterteilung: **28.12.2005**
(21) Anmeldenummer: 02023284.9
(22) Anmeldetag: 17.10.2002
(51) Int. Cl.: G01L 27/00

(54) **Halbleiterbauelement ( Drucksensor ) welches eine Prüfung der Membran und des Hohlraums erlaubt**
Semiconductor device ( pressure sensor ) allowing testing of diaphragm and cavity
Dispositif semiconducteur ( capteur de pression ) permettant un test du diaphragme et de la cavité

(30) Priorität: 08.11.2001 DE 10154867
(43) Veröffentlichungstag der Anmeldung: 14.05.2003
(73) Patentinhaber: ROBERT BOSCH GMBH, 70442 Stuttgart (DE)
(72) Erfinder: Sautter, Helmut, 71254 Ditzingen (DE); Schatz, Frank, 70806 Kornwestheim (DE); Graf, Juergen, 70597 Stuttgart (DE); Artmann, Hans, 71106 Magstadt (DE); Gomez, Udo-Martin, 71229 Leonberg (DE); Kehr, Kersten, 08267 Zwota (DE)

(56) Entgegenhaltungen:
- EP-A- 1 114 988
- US-A- 5 242 863
- US-A- 5 344 523
- US-A- 5 445 991

## Beschreibung

Die Erfindung betrifft ein Halbleiterbauelement, insbesondere einen mikromechanischen Drucksensor, nach der Gattung des Hauptanspruches.

### Stand der Technik

Bei vielen, in Oberflächenmikromechanik aus Silizium herausstrukturierten Drucksensorelementen wird die Referenzdruckkaverne in einer Weise hergestellt, die eine Prüfung der Ausbildung der Kaverne in "offenem" Zustand ermöglicht. Ein derartiges Vorgehen ist jedoch bei Halbleiterbauelementen bzw. Drucksensorelementen, wie sie in der Anmeldung DE 100 32 579.3 (DE-A1-100 32 579 vom 24, 1, 02) vorgeschlagen sind, nicht möglich. Vielmehr erfordert dort die Herstellung der Kaverne bzw. des Hohlraumes durch thermische Behandlung des Halbleitermaterials, das heißt vor allem Silizium, neue Konzepte der Prüfung der Ausdehnung und Dimensionierung des Hohlraumes bzw. der sich darüber befindlichen Membran hinsichtlich Dicke und Beweglichkeit. Übliche Standardmethoden zur Untersuchung von derartigen Hohlräumen wie beispielsweise Röntgentechniken, Ultraschallanalysen oder Thermografieanalysen sind dazu zu aufwändig und in der Serienfertigung nicht einsetzbar.

Aufgabe der vorliegenden Erfindung war die Bereitstellung eines Halbleiterbauelementes, das nach dessen Herstellung im "geschlossenen" Zustand hinsichtlich Ausbildung der Kaverne und Beweglichkeit der Membran in möglichst einfacher Weise prüfbar ist. Insbesondere war es Aufgabe, bei der Herstellung von Drucksensoren auf der Basis von porösem Silizium zu überwachen, ob die erzeugte Kaverne bzw. der erzeugte Hohlraum vollständig und richtig ausgebildet ist, und ob sich nicht Reste von porösem Silizium oder kristallinen Säulenstrukturen im Bereich des Hohlraums befinden, die die gewünschte freie Beweglichkeit der über dem Hohlraum angeordneten Membran behindern.

### Vorteile der Erfindung

Das erfindungsgemäße Halbleiterbauelement hat gegenüber dem Stand der Technik den Vorteil, dass durch dessen Design die Prüfbarkeit der erzeugten Membran hinsichtlich Dicke, Beweglichkeit und mechanischer Eigenschaften wie deren Elastizitätsmodul gegeben ist. Weiter können gleichzeitig oder alternativ dazu auch die Dimensionen der erzeugten Kaverne bzw. des erzeugten Hohlraumes überprüft und gegebenenfalls innerhalb des Hohlraumes noch vorliegende Reste von beispielsweise porösem Silizium oder kristallinen Säulenstrukturen (Stützstellen) detektiert werden.

Dabei ist insbesondere vorteilhaft, dass das Halbleiterbauelement im luftdicht verschlossenen Zustand auch nach Abschluss der Fertigung noch prüfbar ist, so dass nach dieser Prüfung keine weiteren, für die Funktionsfähigkeit der Membran bzw. die Beurteilung der Struktur der Kaverne relevanten Fertigungsschritte nachfolgen.

Ein weiterer Vorteil des erfindungsgemäßen Halbleiterbauelementes liegt darin, dass durch den Aufbau des Halbleiterbauelementes die Möglichkeit gegeben ist, die Membran gegenüber dem Membranboden, das heißt der der Membran gegenüber liegenden Seite der Kaverne, auf ein anderes elektrisches Potential zu legen, so dass über statische aber auch dynami-sche Kapazitätsmessungen Informationen über die Beweglichkeit der Membran und die Struktur bzw. Ausbildung des Hohlraumes gewonnen werden können.

So stellt sich bei der Ausbildung von Säulenstrukturen im Bereich des Hohlraumes bei solchen Kapazitätsmessungen im Grenzfall ein elektrischer Kurzschluss ein, aus dem man schließen kann, dass die Membran im Bereich des Hohlraumes durch eine Säule gestützt und dadurch in ihrer Beweglichkeit behindert wird.

Weiter ist es möglich, über eine kapazitive Anregung die Membran in Schwingungen, insbesondere Resonanzschwingungen, zu versetzen, wobei aus der Resonanzfrequenz und der Güte der Resonanzschwingung auf die Bewegungsfreiheit der Membran und eventuell vorhandene Säulen, selbst im Randbereich des Hohlraumes, geschlossen werden kann. Zudem bietet eine derartige Bestimmung der Resonanzfrequenz oder Analyse der Güte der Resonanzschwingung die Möglichkeit, auf Materialeigenschaften der Membran, beispielsweise deren Elastizitätsmodul und/oder deren Dicke, zurückzuschließen.

Schließlich kann durch ein Ausschwingen der Membran im Rahmen dieser Resonanzschwingungen bis an den Anschlag auch die Höhe des erzeugten Hohlraumes überprüft werden (maximale Membranauslenkung).

Vorteilhafte Weiterbildungen der Erfindung ergeben sich aus den in den Unteransprüchen genannten Maßnahmen.

So ist besonders vorteilhaft, wenn die Membran aus porösem Silizium besteht und vollständig auf ihrer der Grundschicht abgewandten Seite so mit der Deckschicht bedeckt ist, dass der eingeschlossene Hohlraum bzw. die Kaverne gasdicht abgeschlossen ist.

Zur elektrischen Isolation der Membran gegenüber dem auf der anderen Seite der Kaverne befindlichen Bereich der Grundschicht ist vorteilhaft vorgesehen, wenn seitlich um den Hohlraum bzw. die Kaverne eine umlaufende Randschicht vorgesehen ist, die zwar wie die Membran und die Grundschicht aus Silizium besteht, die aber gegenüber diesen eine andere Dotierung aufweist, so dass insgesamt zwischen der Membran, der umlaufenden Randschicht und der Grundschicht durch geeignete Dotierung des Siliziums ein pnp-Übergang realisiert ist, der elektrisch isolierend wirkt.

Daneben ist vorteilhaft, wenn der oberhalb der Membran vorgesehene Leiterbereich mindestens zwei Teilbereiche aufweist, wobei ein erster Teilbereich die gesamte Oberfläche der der Grundschicht abgewandten Seite der Membran bedeckt und diese elektrisch kontaktierbar macht, und wobei ein von der Oberfläche der Deckschicht ausgehender zweiter Teilbereich der Leitschicht in der Deckschicht vorgesehen ist, der zumindest bereichsweise elektrisch leitend mit dem ersten Teilbereich in Verbindung steht, und der auf oder in der Deckschicht über dort geführte Leiterbahnen elektrisch kontaktierbar ist.

Weiter ist vorteilhaft, dass der erste Teilbereich des Leitbereiches in einfacher Weise durch eine Temperaturbehandlung des Halbleiterbauelementes erzeugbar ist, in deren Verlauf es zu einer Ausdiffusion der Dotierung der Membran in den darüber liegenden Bereich der Deckschicht kommt, was diesen Diffusionsbereich gegenüber der restlichen Detektionsschicht elektrisch vergleichsweise gut leitfähig macht.

Entsprechend wird auch der im Bereich der Oberfläche der Deckschicht vorgesehene zweite Teilbereich des Leitbereiches vorteilhaft durch eine Dotierung der Oberfläche der Deckschicht erzeugt, die im Laufe dieser oder einer weiteren Temperaturbehandlung ebenfalls ausdiffundiert und zu einem Diffusionsbereich führt, der so den zweiten Teilbereich der Leitschicht definiert. Auch dieser zweite Teilbereich des Leitbereiches ist dann gegenüber den restlichen Bereichen der Deckschicht elektrisch vergleichsweise gut leitend.

Sobald es im Laufe der Temperaturbehandlung zu einer Berührung oder einer elektrisch leitenden Verbindung der beiden Teilbereiche der Leitschicht kommt, ist eine elektrische Kontaktierung der von der Deckschicht abgeschlossenen Membran von deren Oberseite aus auch im geschlossenen Zustand des Halbleiterbauelementes problemlos möglich.

Vorteilhaft ist schließlich, wenn der Leitbereich und insbesondere eine Mehrzahl von in Draufsicht kreisförmigen, bevorzugt im Bereich der Ecken der Membran befindliche zweite Teilbereiche des Leitbereiches elektrisch mit mehreren, bezüglich einer Draufsicht auf die Membran symmetrisch zu dieser angeordneten Leiterbahnen verbunden sind, wobei jedem der zweiten Teilbereiche des Leitbereiches eine Leiterbahn zugeordnet ist. Insbesondere ist bevorzugt eine gerade Anzahl von Leiterbahnen, insbesondere vier, vorgesehen, wobei diese bereichsweise entlang der Flächendiagonalen oberhalb der bevorzugt rechteckig, insbesondere quadratisch, oder auch rund oder oval ausgebildeten Membran verlaufen.

Durch eine derartige symmetrische Anordnung der Leiterbahnen wird erreicht, dass die im Bereich der Deckschicht bzw. auf der Deckschicht verlaufenden Mittel zur Induktion und/oder Detektion einer Verwölbung der Membran wie beispielsweise piezoresistive Bauelemente oder auch Heizelemente durch Zuleitungen nicht unterschiedlich beeinflusst werden.

### Zeichnungen

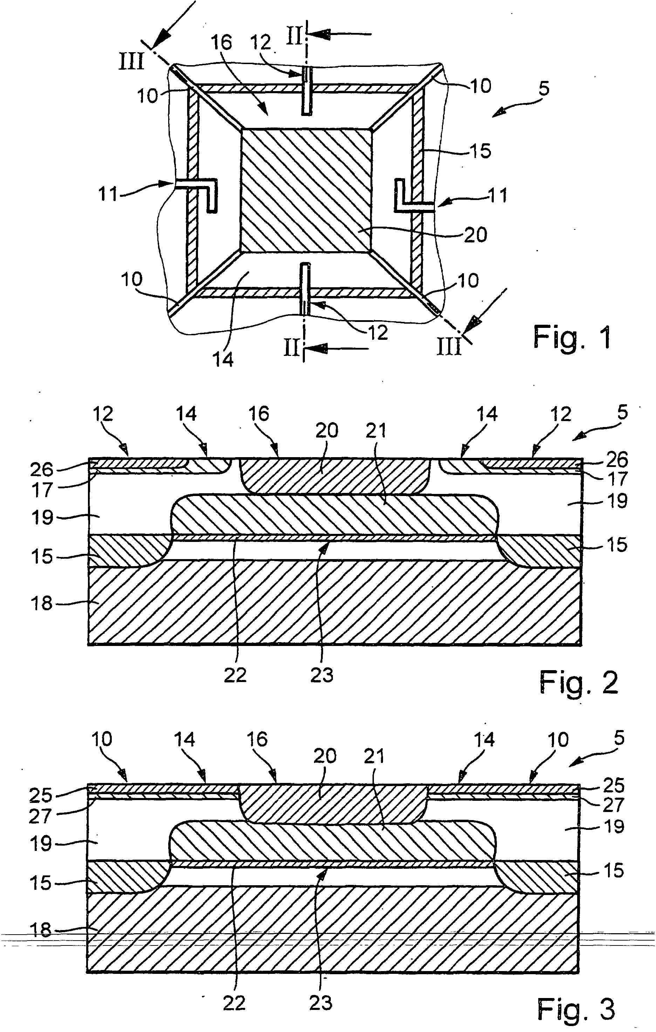

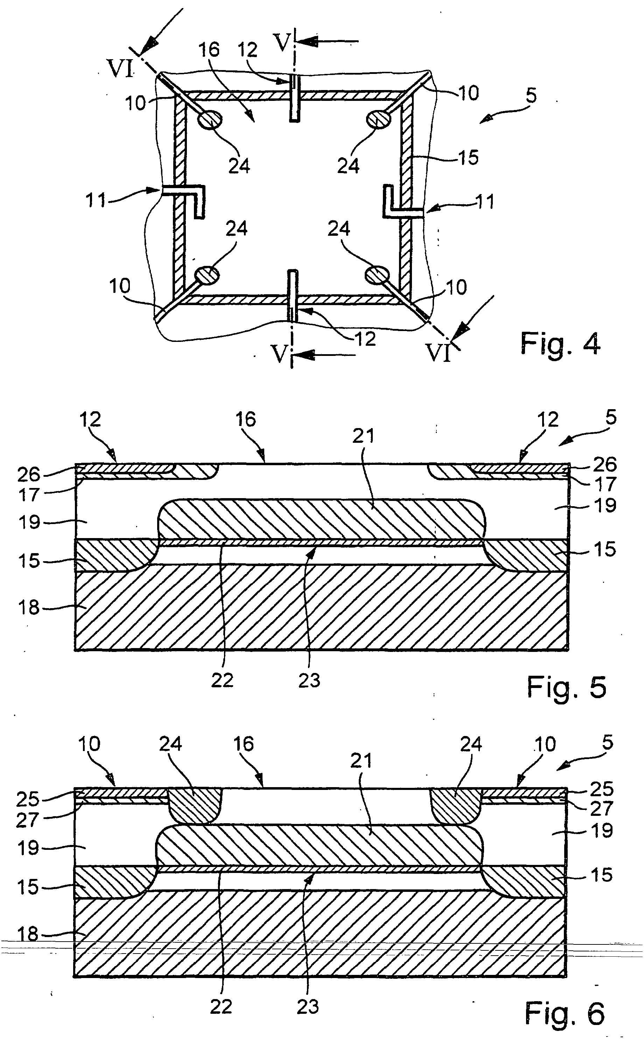

Die Erfindung wird anhand der Zeichnungen und in der nachfolgenden Beschreibung näher erläutert. Es zeigt Figur 1 eine Draufsicht auf ein Halbleiterbauelement in Form eines mikromechanischen Drucksensors, Figur 2 einen ersten Schnitt durch Figur 1 entlang der eingezeichneten Schnittlinie, Figur 3 einen zweiten Schnitt durch Figur 1 entlang der zweiten, in Figur 1 eingezeichneten Schnittlinie (Diagonale), Figur 4 ein zweites, zur Figur 1 alternatives Ausführungsbeispiel eines Halbleiterbauelementes in Form eines mikromechanischen Drucksensors, Figur 5 einen ersten Schnitt durch Figur 4 entlang der eingezeichneten Schnittlinie und Figur 6 einen Schnitt durch Figur 4 entlang der zweiten eingezeichneten Schnittlinie (Diagonale).

### Ausführungsbeispiele

Die Figur 1 erläutert als erstes Ausführungsbeispiel ein Halbleiterbauelement in Form eines in Oberflächenmikromechanik hergestellten Drucksensorelementes 5 für den atmosphärischen oder atmosphärennahen Druckbereich. Dieses Drucksensorelement 5 wurde auf Basis der porösen Silizium-Technologie hergestellt und ist grundsätzlich, abgesehen von den nachfolgend erläuterten, erfindungsgemäß vorgenommenen Modifikationen, hinsichtlich Aufbau und Herstellungsverfahren bereits in der Anmeldung DE 100 32 579.3 beschrieben.

In Figur 1 ist zunächst in Draufsicht auf das Drucksensorelement 5 dargestellt, wie auf der Oberfläche oder im Bereich der Oberfläche einer Deckschicht 19 aus n-dotiertem Silizium, insbesondere aus Epi-Silizium, erste Aktorelemente 11 und zweite Aktorelemente 12, jeweils beispielsweise in Form von Piezowiderständen oder strukturierten piezoresistiven Schichten, vorgesehen sind. Diese bestehen bevorzugt aus in bekannter Weise geeignet dotiertem Silizium. Weiter zeigt Figur 1, dass auf der Oberfläche oder im Bereich der Oberfläche der Deckschicht 19 Leiterbahnen 10 verlaufen, die beispielsweise ebenfalls aus entsprechend dotiertem Silizium bestehen.

Daneben ist in Figur 1 dargestellt, dass die Aktorelemente 11, 12 in einem Randflächenbereich 14 enden, der bevorzugt aus n-dotiertem Silizium, insbesondere Epi-Silizium, besteht, während die Leiterbahnen 10 über diesen Randflächenbereich 14 hinaus in einen Membranflächenbereich 16 geführt sind, der in Draufsicht rechteckig oder bevorzugt quadratisch ausgebildet ist.

Unterhalb des Membranflächenbereiches 16 und unterhalb der Deckschicht 19 befindet sich eine in Figur 1 nicht sichtbare Membran 22, die eine Kaverne oder einen Hohlraum 23 bedeckt. Die ersten Aktorelemente 11 sind zudem im Bereich des Randflächenbereiches 14 bevorzugt rechtwinklig abgeknickt, was die Verwölbung der Membran 22 oder auch die Detektion der Verwölbung der Membran 22 erleichtert. Insbesondere wird auf diese Weise ein gleichmäßigerer, vorzugsweise im Randbereich der Membran 22 gewünschter Krafteintrag in die Membran 22 erreicht. Aus Figur 2 ist erkennbar, dass sich der Randflächenbereich 14 zumindest teilweise, vorzugsweise möglichst weitgehend, in den Bereich über der Membran 22 erstreckt.

Im übrigen sei an dieser Stelle betont, dass die Aktorelemente 11, 12 sowohl zur Verwölbung als auch zur Detektion einer Verwölbung der Membran 22, beispielsweise durch einen sich ändernden äußeren Druck, eingesetzt werden. Insofern können die Aktorelemente 11, 12 auch als Sensierelemente oder passive Bauelemente, beispielsweise piezoresistive Widerstände, ausgeführt sein bzw. betrieben werden.

Die Figur 2 zeigt Figur 1 entlang der eingezeichneten Schnittlinie, wobei im Bereich der Oberfläche der Deckschicht 19 die zweiten Aktorelemente 12 erkennbar sind. Diese sind jeweils aus einer ersten, geeignet strukturierten Leitschicht 26 ausgebildet, die der elektrischen Kontaktierung bzw. der Zufuhr oder der Abfuhr von elektrischem Strom dient, sowie einer die erste Leitschicht 26 von der Deckschicht 19 trennenden und darüber elektrisch kontaktierten Aktorschicht 17, die unterhalb der ersten Leitschicht 26 verläuft. Die Aktorschicht 17 ist beispielsweise eine piezoelektrische oder piezoresistive Schicht.

Weiter zeigt Figur 2, dass die Deckschicht 19 über einer Grundschicht 18 oder einem Substrat aus beispielsweise p-dotiertem Silizium verläuft, wobei zwischen der Grundschicht 18 und der Deckschicht 19 der quaderförmige Hohlraum 23 eingeschlossen ist, der durch die Membran 22 gegenüber der Deckschicht 19 begrenzt wird. Im Randbereich der Kaverne 23 zwischen der Grundschicht 18 und der Deckschicht 19 ist zudem eine Randschicht 15 aus vorzugsweise n-dotiertem Silizium vorgesehen, die um den Hohlraum 23 herumläuft und umlaufend mit der Membran 22 in Kontakt ist. Diese Randschicht 15 ist auch in Figur 1 umlaufend angedeutet, dort jedoch in Draufsicht eigentlich nicht sichtbar.

Die Membran 22 besteht beispielsweise aus p-dotiertem Silizium, insbesondere aus entsprechendem porösem Silizium. Ihre Dicke beträgt bevorzugt 0,5 µm bis 1,0 µm bei einer lateralen Ausdehnung in jeder Richtung zwischen 100 µm und 800 µm, abhängig vom Druckbereich. Die Deckschicht 19 ist insbesondere gasdicht und schließt damit den Hohlraum 23 gegenüber der äußeren Atmosphäre gasdicht ab. Ihre Dicke beträgt bevorzugt 5 µm bis 10 µm, und die Höhe der Kaverne 23 liegt bevorzugt zwischen 3 µm und 7 µm. Auf diese Weise ist gewährleistet, dass bei einer Änderung eines äußeren Druckes eine Verbiegung der Membran 22 und auch der Deckschicht 19 auftritt, die in der Größenordnung von 0,5 µm/bar bis 5 µm/bar, insbesondere 1 µm/bar bis 2 µm/bar, liegt.

Die Figur 3 zeigt einen Schnitt durch Figur 1 entlang der Diagonalen, wobei nun im Bereich der Oberfläche der Deckschicht 19 die Leiterbahnen 10 erkennbar sind, die jeweils aus einer zweiten, beispielsweise p⁺-dotierten und vergleichsweise niederohmigen Leitschicht 25 bestehen, die der elektrischen Zuleitung oder elektrischen Kontaktierung dient, sowie einer darunter befindlichen, beispielsweise p⁻ dotierten, vergleichsweise hochohmigen Trennschicht 27. Eine elektrische Isolation der Trennschicht 27 bzw. der Leitschicht 25 gegenüber der Deckschicht 19 wird dabei durch den erhaltenen pn-Übergang gewährleistet.

Bevorzugt besteht sowohl die zweite Leitschicht 25 als auch die Trennschicht 27 jeweils im Wesentlichen aus Silizium, das, wie erläutert, jeweils geeignet unterschiedlich dotiert ist. Man erkennt in Figur 3 zudem deutlich, dass die Leiterbahnen 10 bis in den Membranflächenbereich 16 hineinreichen.

In den Figuren 2 und 3 ist darüber hinaus erkennbar, dass oberhalb der Membran 22 ein erster Leitbereich 21 aus p-dotiertem Silizium vorgesehen ist, der gegenüber der übrigen Deckschicht 19 elektrisch gut leitend ist. Dieser erste Leitbereich 21 bedeckt die gesamte Oberfläche der der Grundschicht 18 abgewandten Oberfläche der Membran 22. Weiter ist ein von der der Membran 22 abgewandten Seite der Oberfläche der Deckschicht 19 ausgehender zweiter Leitbereich 20 aus vorzugsweise p-dotiertem Silizium vorgesehen, der ebenfalls gegenüber der restlichen Deckschicht 19 elektrisch vergleichsweise gut leitend ist. Der zweite Leitbereich 20 und der erste Leitbereich 21 stehen in Kontakt miteinander bzw. gehen zumindest bereichsweise ineinander über, so dass darüber von der Oberfläche der Deckschicht 19 ausgehend eine elektrische Kontaktierung der gesamten Oberfläche der Membran 22 möglich ist. Der zweite Leitbereich 20 reicht gemäß Figur 2 oder 3 bis zur äußeren Oberfläche des Halbleiterbauelementes 5 und ist insofern, wie in Figur 1 in Draufsicht gezeichnet, von dort unmittelbar zugänglich.

Gemäß Figur 3 stehen schließlich die Leiterbahnen 10 mit dem zweiten Leitbereich 20 elektrisch leitend in Verbindung, während die zweiten Aktorelemente 12 gegenüber dem zweiten Leitbereich 20 elektrisch isoliert sind. Zudem ist der erste Leitbereich 21 gemäß den Figuren 2 oder 3 gegenüber der Grundschicht 18 elektrisch isoliert, da sich im erläuterten Aufbau zwischen Grundschicht 18, Randschicht 15 und Membran 22 bzw. erstem Leitbereich 12 ein pnp-Übergang ausgebildet hat, der elektrisch isolierend wirkt.

Insgesamt wird durch das Ausführungsbeispiel gemäß den Figuren 1 bis 3 erreicht, dass die Membran 22 vom von der Grundschicht 18 gebildeten Boden der Kaverne 23 elektrisch isoliert ist, und gleichzeitig von der Oberfläche der Deckschicht 19 ausgehend eine elektrische Zuleitung bzw. elektrische Kontaktierungsmöglichkeit der Membran 22 gegeben ist.

Zur Analyse der Beweglichkeit der Membran und der Ausdehnung und der Kaverne 23 sind bei dem erläuterten Ausführungsbeispiel weiter an sich bekannte, nicht dargestellte Mittel vorgesehen, mit denen zwischen der dem Hohlraum 23 zugewandten Oberfläche der Membran 22 und dem der Membran 22 gegenüber liegenden Teil der Oberfläche der Grundschicht 18 eine vorgebbare und/oder variabel einstellbare elektrische Spannung anlegbar und/oder insbesondere als Funktion der Zeit messbar ist, oder mit denen zumindest diese Oberfläche der Membran 22 gegenüber der Oberfläche der Grundschicht 18 auf ein definiertes, insbesondere als Funktion der Zeit veränderbares elektrisches Potential gelegt werden kann.

Insbesondere sind die genannten Mittel elektrische Bauelemente, mit denen eine insbesondere statische Messung der Kapazität zwischen der dem Hohlraum 23 zugewandten Oberfläche der Membran 22 und dem der Membran 22 gegenüber liegenden Teil der Oberfläche der Grundschicht 18 durchführbar ist. Weiter ist mit diesen Bauelementen auch ein möglicherweise vorliegender elektrischer Kurzschluss zwischen der dem Hohlraum 23 zugewandten Oberfläche der Membran 22 und dem der Membran 22 gegenüberliegenden, den Hohlraum 23 begrenzenden Teil der Oberfläche der Grundschicht 18 detektierbar.

In bevorzugter Ausgestaltung der Erfindung ist mit Hilfe der genannten elektrischen Bauelemente die Membran 22 über eine kapazitive Anregung in eine Schwingung, vorzugsweise eine Resonanzschwingung, versetzbar. Gleichzeitig dienen diese auch der Analyse der hervorgerufenen Schwingung, insbesondere der Messung der Resonanzfrequenz und/oder der Güte der Resonanzschwingung, um darüber mechanische Eigenschaften der Membran 22 wie deren Beweglichkeit gegenüber dem Hohlraum 23 und/oder deren Elastizitätsmodul und/oder deren laterale Ausdehnung oder Dicke zu bestimmen. Dazu geeignete elektrische Bauelemente und deren Verschaltung sind aus dem Stand der Technik hinlänglich bekannt und bedürfen hier keiner ausführlichen Erläuterung.

Vorrangig bestimmt die vorstehend erläuterte Analyse die elektrische Kapazität zwischen der Membranunterseite und dem Kavernenboden, die im statischen Fall eine Aussage über die Kavernenhöhe und eventuelle Neben- oder Kurzschlüsse, beispielsweise durch Reste von porösem Silizium oder Säulen in der Kaverne 23, erlaubt.

Im Fall der Anregung einer Schwingung, insbesondere einer Resonanzschwingung, erhält man aus deren Analyse, beispielsweise hinsichtlich Frequenz und Güte der Schwingung, insbesondere unter Einbeziehung der elektrischen Kapazität, ebenfalls Informationen über die Beweglichkeit der Membran 23, deren maximale Auslenkbarkeit, über Versteifungen oder Stützstellen der Membran 22 im Bereich der Kaverne 23 oder auch über mechanische Eigenschaften der Membran wie deren Dicke oder deren Elastizitätsmodul.

Die Figuren 4 bis 6 erläutern ein zu den Figuren 1 bis 3 alternatives Ausführungsbeispiel für ein Halbleiterbauelement in Form eines mikromechanischen Drucksensorelementes 5, das sich von dem ersten Ausführungsbeispiel lediglich dadurch unterscheidet, dass der zweite Leitbereich 20 gemäß Figur 2 oder 3 als in Draufsicht punktförmiger bzw. kreisförmiger, im Bereich der Ecken der Membran 22 angeordneter dritter Leitbereiche 24 ausgebildet ist. Dies wird besonderes deutlich in Figur 6, die einen Schnitt entlang der Diagonalen gemäß Figur 4 zeigt.

Im Rahmen dieses Ausführungsbeispiels ist es nicht mehr erforderlich, die Leiterbahnen 10 in den Bereich oberhalb der Membran 22 hineinzuführen, und es beschränken sich die dritten Leitbereiche 24 auf relativ eng definierte Bereiche innerhalb der Deckschicht 19, die durch eine geeignete lokale Dotierung der Deckschicht 19, beispielsweise mit Hilfe einer entsprechenden Maske, erzeugt worden sind. Insofern kann gemäß Figur 4 auch der in Figur 1 vorgesehene Membranflächenbereich 16 elektrisch isolierend bleiben, das heißt, dieser wird weiter von der Deckschicht 19 aus elektrisch isolierendem Material oder elektrisch gegenüber den Leitbereichen 20, 21, 24 vergleichsweise schlecht leitendem Material wie n-dotiertem Silizium gebildet.

Abschließend sei noch ausgeführt, dass die ersten Aktorelemente 11 bzw. die zweiten Aktorelemente 12 für die Funktion des erläuterten Drucksensors nicht zwingend erforderlich sind, da eine Verwölbung der Membran 22 infolge eines sich ändernden äußeren Drucks beispielsweise auch über eine Änderung der Kapazität zwischen Membran 22 und Grundschicht 18 detektierbar ist.

Weiter können die Aktorelemente 11, 12 auch als Heizelemente bzw. Heizleiter ausgeführt sein, die über einen Wärmeeintrag und dadurch induzierte mechanische Spannungen eine Verwölbung der Membran 22 bewirken.

Schließlich kann die Funktion einer Leiterbahn 10 und eines Aktorelementes 11, 12 auch in einem Strukturelement vereinigt sein, mit dem dann jeweils sowohl eine elektrische Kontaktierung des zweiten Leitbereiches 20 bzw. des dritten Leitbereiches 24 erfolgt, als auch eine Verwölbung der Membran 22 induzierbar oder detektierbar ist.

## Patentansprüche

1. Halbleiterbauelement, insbesondere mikromechanischer Drucksensor, mit
- einer Grundschicht (18),
- einer zumindest weitgehend freitragenden Membran (22) und
- einer auf der Membran (22) befindlichen Deckschicht (19),
wobei die Membran (22) und die Grundschicht (18) zumindest bereichsweise einen Hohlraum (23) begrenzen,
**dadurch gekennzeichnet, dass**
über der Membran (22) ein Leitbereich (20, 21, 24) in der gegenüber dem Leitbereich (20, 21, 24) elektrisch schlecht leitenden Deckschicht (19) vorgesehen ist, wobei der Leitbereich (20, 21, 24)
- die gesamte Oberfläche der der Grundschicht (18) abgewandten Oberfläche der Membran (22) bedeckt und
- mit dem die der Deckschicht (19) zugewandte Oberfläche der Membran (22) elektrisch kontaktierbar ist.

2. Halbleiterbauelement nach Anspruch 1, **dadurch gekennzeichnet, dass** der Hohlraum (23) von der Membran (22), der Grundschicht (18) und einer insbesondere seitlich um den Hohlraum (23) umlaufenden, zwischen Deckschicht (19) und Grundkörper (18) befindlichen Randschicht (15) umschlossen ist.

3. Halbleiterbauelement nach Anspruch 1 oder 2, **dadurch gekennzeichnet, dass** die Membran (22) aus porösem Silizium besteht und vollständig auf ihrer der Grundschicht (18) abgewandten Seite derart mit der Deckschicht (19) bedeckt ist, dass der Hohlraum (23) zumindest weitgehend gasdicht abgeschlossen ist.

4. Halbleiterbauelement nach einem der vorangehenden Ansprüche, **dadurch gekennzeichnet, dass** der Leitbereich (20, 21, 24) mindestens zwei Teilbereiche aufweist, wobei ein erster Teilbereich (21) die gesamte Oberfläche der der Grundschicht (18) abgewandten Seite der Membran (22) bedeckt und diese elektrisch kontaktierbar macht, und wobei bereichsweise mindestens ein mit dem ersten Teilbereich (21) elektrisch leitend verbundener zweiter Teilbereich (20, 24) in der Deckschicht (19) vorgesehen ist, der mit mindestens einer bereichsweise auf oder in der Deckschicht (19) geführten Leiterbahn (10) in Verbindung steht.

5. Halbleiterbauelement nach einem der vorangehenden Ansprüche, **dadurch gekennzeichnet, dass** der Leitbereich (20, 21, 24) und insbesondere eine Mehrzahl von zweiten Teilbereichen (24) elektrisch mit mehreren, bezüglich einer Draufsicht auf die Membran (22) symmetrisch zu dieser angeordneten Leiterbahnen (10), insbesondere 2n mit n = 1, 2, 3, ... Leiterbahnen (10), verbunden ist.

6. Halbleiterbauelement nach einem der vorangehenden Ansprüche, **dadurch gekennzeichnet, dass** die Membran (22) in Draufsicht rechteckig, insbesondere quadratisch, ausgebildet ist, und dass die Leiterbahnen (10) parallel und insbesondere bereichsweise auf den Flächendiagonalen dieses Rechteckes verlaufen.

7. Halbleiterbauelement nach einem der vorangehenden Ansprüche, **dadurch gekennzeichnet, dass** der zweite Teilbereich (24) des Leitbereiches (20, 21, 24) in Draufsicht auf die Membran (22) die Form von insbesondere näherungsweise runden Leitpunkten aufweist, wobei eine der Zahl der Leiterbahnen (10) entsprechende Zahl von Leitpunkten vorgesehen ist.

8. Halbleiterbauelement nach einem der vorangehenden Ansprüche, **dadurch gekennzeichnet, dass** die Leitpunkte in Draufsicht auf die Membran (22) symmetrisch insbesondere in einer Umgebung der Ecken der Membran (22) angeordnet und dort mit der dem Leitpunkt jeweils zugeordneten Leiterbahn (10) elektrisch verbunden sind.

9. Halbleiterbauelement nach einem der vorangehenden Ansprüche, **dadurch gekennzeichnet, dass** auf oder in der Deckschicht (19) bereichsweise mindestens ein Mittel (11, 12), insbesondere ein piezoresistiver Widerstand (11, 12) oder ein Heizelement, vorgesehen ist, mit dem eine Verwölbung der Membran (22) induzierbar und/oder detektierbar ist.

10. Halbleiterbauelement nach einem der vorangehenden Ansprüche, **dadurch gekennzeichnet, dass** die Membran (22) gegenüber der Grundschicht (18) oder zumindest gegenüber dem der Membran (22) gegenüber liegenden, den Hohlraum (23) begrenzenden Bereich der Oberfläche der Grundschicht (18) elektrisch isoliert ist.

11. Halbleiterbauelement nach einem der vorangehenden Ansprüche, **dadurch gekennzeichnet, dass** die Membran (22) und die Grundschicht (18) oder zumindest der der Membran (22) gegenüber liegende, den Hohlraum (23) begrenzende Bereich der Oberfläche der Grundschicht (18) gegenüber den nicht von dem Leitbereich (20, 21, 24) eingenommenen Bereichen der Deckschicht (19) elektrisch vergleichsweise gut leitend sind.

12. Halbleiterbauelement nach einem der vorangehenden Ansprüche, **dadurch gekennzeichnet, dass** Mittel vorgesehen sind, mit denen zwischen der dem Hohlraum (23) zugewandten Oberfläche der Membran (22) und dem der Membran (22) gegenüber liegenden Teil der Oberfläche der Grundschicht (18) eine vorgebbare und/oder variabel einstellbare elektrische Spannung anlegbar oder insbesondere als Funktion der Zeit messbar ist, und/oder dass Mittel vorgesehen sind, mit denen zumindest der der Membran (22) gegenüber liegende, den Hohlraum (23) begrenzende Bereich der Oberfläche der Grundschicht (18) elektrisch mit einer vorgebaren und/oder variabel einstellbaren elektrischen Spannung beaufschlagbar ist oder mit denen eine dort anliegende elektrische Spannung insbesondere als Funktion der Zeit messbar ist.

13. Halbleiterbauelement nach einem der vorangehenden Ansprüche, **dadurch gekennzeichnet, dass** elektronische Bauelemente vorgesehen sind, mit denen eine insbesondere statische Messung der Kapazität zwischen der dem Hohlraum (23) zugewandten Oberfläche der Membran (22) und dem der Membran (22) gegenüber liegenden Teil der Oberfläche des Grundschicht (18) durchführbar ist.

14. Halbleiterbauelement nach einem der vorangehenden Ansprüche, **dadurch gekennzeichnet, dass** elektronische Bauelemente vorgesehen sind, mit denen ein elektrischer Kurzschluss zwischen der dem Hohlraum (23) zugewandten Oberfläche der Membran (22) und dem der Membran (22) gegenüber liegenden, den Hohlraum (23) begrenzenden Teil der Oberfläche der Grundschicht (18) detektierbar ist.

15. Halbleiterbauelement nach einem der vorangehenden Ansprüche, **dadurch gekennzeichnet, dass** elektronische Bauelemente vorgesehen sind, mit denen insbesondere über eine kapazitive Anregung die Membran (22) in eine Schwingung, insbesondere eine Resonanzschwingung versetzbar ist, und dass elektronische Bauelemente vorgesehen sind, mit denen über eine Analyse dieser Schwingung, insbesondere eine Messung der Resonanzfrequenz und/oder der Güte der Resonanzschwingung, mechanische Eigenschaften der Membran (22), insbesondere deren Beweglichkeit gegenüber dem Hohlraum (23) oder das Vorhandensein oder die Position von Stützstellen in dem Hohlraum (23), und/oder deren Elastizitätsmodul und/oder deren laterale Ausdehnung oder Dicke bestimmbar sind.

16. Halbleiterbauelement nach einem der vorangehenden Ansprüche, **dadurch gekennzeichnet, dass** die Deckschicht (19), die Grundschicht (18), die Membran (22) und die Randschicht (15) aus Silizium, insbesondere geeignet unterschiedlich dotiertem Silizium, bestehen.

## Claims

1. Semiconductor device, in particular a micromechanical pressure sensor, with
- a base layer (18),
- an at least largely self-supporting diaphragm (22) and
- a top layer (19) located on the diaphragm (22), the diaphragm (22) and the base layer (18) delimiting at least regions of a cavity (23),
**characterized in that**
a conducting region (20, 21, 24) is provided over the diaphragm (22) in the top layer (19), which has poor electrical conducting properties in comparison with the conducting region (20, 21, 24), the conducting region (20, 21, 24)
- covering the entire surface of the surface of the diaphragm (22) that is facing away from the base layer (18) and
- it being possible for the surface of the diaphragm (22) that is facing the top layer (19) to be electrically contacted with it.

2. Semiconductor device according to Claim 1,
**characterized in that** the cavity (23) is enclosed by the diaphragm (22), the base layer (18) and a bordering layer (15) which in particular runs laterally around the cavity (23) and is located between the top layer (19) and the base layer (18).

3. Semiconductor device according to Claim 1 or 2, **characterized in that** the diaphragm (22) consists of porous silicon and on its side facing away from the base layer (18) is completely covered by the top layer (19), **in that** the cavity (23) is closed off in an at least largely gastight manner.

4. Semiconductor device according to one of the preceding claims, **characterized in that** the conducting region (20, 21, 24) has at least two subregions, a first subregion (21) covering the entire surface of the side of the diaphragm (22) that is facing away from the base layer (18) and making it electrically contactable, and there being provided in regions of the top layer (19) at least one second subregion (20, 24), which is connected in an electrically conducting manner to the first subregion (21) and is in connection with at least one interconnect (10) routed in regions on or in the top layer (19).

5. Semiconductor device according to one of the preceding claims, **characterized in that** the interconnect (20, 21, 24), and in particular a plurality of second subregions (24), is electrically connected to a number of interconnects (10) arranged symmetrically in relation to the membrane. (22) with respect to a plan view of the latter, in particular 2n interconnects (10), where n = 1, 2, 3....

6. Semiconductor device according to one of the preceding claims, **characterized in that** the diaphragm (22) is of a rectangular, in particular square, form in plan view, and **in that** the interconnects (10) run parallel and in particular in regions on the plane diagonal of this rectangle.

7. Semiconductor device according to one of the preceding claims, **characterized in that** the second subregion (24) of the conducting region (20, 21, 24) has in plan view of the diaphragm (22) the form of conducting points, in particular approximately round conducting points, a number of conducting points that corresponds to the number of interconnects (10) being provided.

8. Semiconductor device according to one of the preceding claims, **characterized in that** the conducting points are arranged symmetrically in plan view of the diaphragm (22), in particular in an area around the corners of the diaphragm (22), and are electrically connected there to the interconnect (10) respectively assigned to the conducting point.

9. Semiconductor device according to one of the preceding claims, **characterized in that** at least one means (11, 12), in particular a piezoresistive resistor (11, 12) or a heating element, with which a bowing of the diaphragm (22) can be induced and/or detected is provided on or in regions of the top layer (19).

10. Semiconductor device according to one of the preceding claims, **characterized in that** the diaphragm (22) is electrically insulated from the base layer (18) or at least from the region of the surface of the base layer (18) that lies opposite the diaphragm (22) and delimits the cavity (23).

11. Semiconductor device according to one of the preceding claims, **characterized in that** the diaphragm (22) and the base layer (18), or at least the region of the surface of the base layer (18) that lies opposite the diaphragm (22) and delimits the cavity (23), have comparatively good electrical conducting properties in comparison with the regions of the top layer (19) that are not taken up by the conducting region (20, 21, 24).

12. Semiconductor device according to one of the preceding claims, **characterized in that** means are provided with which a predeterminable and/or variably adjustable electric voltage can be applied, or in particular can be measured as a function of time, between the surface of the diaphragm (22) that is facing the cavity (23) and the part of the surface of the base layer (18) that lies opposite the diaphragm (22), and/or **in that** means are provided with which at least the region of the surface of the base layer (18) that lies opposite the diaphragm (22) and delimits the cavity (23) can be subjected to a predeterminable and/or variably adjustable electric voltage or with which an electric voltage present there can be measured, in particular as a function of time.

13. Semiconductor device according to one of the preceding claims, **characterized in that** electronic components are provided with which a measurement, in particular a static measurement, of the capacitance between the surface of the diaphragm (22) that is facing the cavity (23) and the part of the surface of the base layer (18) that lies opposite the diaphragm (22) can be carried out.

14. Semiconductor device according to one of the preceding claims, **characterized in that** electronic components are provided with which an electrical short-circuit between the surface of the diaphragm (22) that is facing the cavity (23) and the part of the surface of the base layer (18) that lies opposite the diaphragm (22) and delimits the cavity (23) can be detected.

15. Semiconductor device according to one of the preceding claims, **characterized in that** electronic components are provided with which it is possible to make the diaphragm (22) undergo a vibration, in particular a resonant vibration, in particular by means of a capacitive excitation, and **in that** electronic components are provided with which mechanical properties of the diaphragm (22), in particular its mobility with respect to the cavity (23) or the presence or the position of supporting points in the cavity (23), and/or its modulus of elasticity and/or its lateral extent or thickness can be determined by means of an analysis of this vibration, in particular a measurement of the resonant frequency and/or the quality of the resonant vibration.

16. Semiconductor device according to one of the preceding claims, **characterized in that** the top layer (19), the base layer (18), the diaphragm (22) and the bordering layer (15) consist of silicon, with differently doped silicon being suitable in particular.

## Revendications

1. Elément semi-conducteur, notamment capteur de pression micromécanique, avec
- une couche de base (18),
- une membrane saillant au moins en grande partie librement (22),
- une couche de couverture (19) située sur la membrane (22), la membrane (22) et la couche de base (18) limitant au moins en partie un espace creux (23),
**caractérisé en ce qu'**
une zone conductrice (20, 21, 24) est prévue sur la membrane (22) dans la couche de couverture de mauvaise conduction électrique (19) par rapport à la zone conductrice (20, 21, 24), la zone conductrice (20, 21, 24) recouvrant toute la surface de la membrane (22) détournée de la couche de base (18) et pouvant être mise en contact avec la surface de la membrane (22) tournée vers la couche de couverture (19).

2. Elément semi-conducteur selon la revendication 1,
**caractérisé en ce que**
l'espace creux (23) est entouré par la membrane (22), la couche de base (18) et une couche de bord (15) entourant latéralement l'espace creux (23)et située entre la couche de couverture (19) et le corps de base (18).

3. Elément semi-conducteur selon la revendication 1 ou 2,
**caractérisé en ce que**
la membrane (22) est en silicium poreux et recouverte entièrement, sur son côté détourné de la couche de base (18), par la couche de couverture (19) de telle sorte que l'espace creux (23) est fermé de manière la plus imperméable possible aux gaz.

4. Elément semi-conducteur selon l'une quelconque des revendications précédentes,
**caractérisé en ce que**
la zone conductrice (20, 21, 24) présente au moins deux zones partielles, une première zone partielle (21) recouvrant toute la surface du côté de la membrane (22) détourné de la couche de base (18), et la mettant en contact électrique, et au moins une deuxième zone partielle (20, 24) reliée de manière électriquement conductrice à la première zone partielle (21) est au moins en partie prévue dans la couche de couverture (19) reliée au moins à un circuit conducteur (10) guidé en partie sur ou dans la couche de couverture (19).

5. Elément semi-conducteur selon l'une quelconque des revendications précédentes,
**caractérisé en ce que**
la zone conductrice (20, 21, 24) et notamment plusieurs deuxièmes zones partielles (24) sont reliées électriquement à plusieurs circuits conducteurs (10), disposés symétriquement par rapport à la membrane (22) par rapport à une vue de dessus de celle-ci, notamment 2n circuits conducteurs (10), où n = 1, 2, 3, ....

6. Elément semi-conducteur selon l'une quelconque des revendications précédentes,
**caractérisé en ce que**
la membrane (22) est rectangulaire, notamment carrée, vue de dessus, et les circuits conducteurs (10) sont parallèles et passent notamment partiellement sur les diagonales de surface de ce rectangle/carré.

7. Elément semi-conducteur selon l'une quelconque des revendications précédentes,
**caractérisé en ce que**
la deuxième zone partielle (24) de la zone conductrice (20, 21, 24) présente, si la membrane (22) est vue de dessus, la forme de points conducteurs pratiquement ronds, le nombre de circuits conducteurs (10) correspondant au nombre de points conducteurs.

8. Elément semi-conducteur selon l'une quelconque des revendications précédentes,
**caractérisé en ce que**
les points conducteurs sont disposés symétriquement sur la membrane (22), vue de dessus, notamment aux alentours des coins de la membrane (22), et y sont reliés électriquement au circuit conducteur (10) associé au point conducteur respectif.

9. Elément semi-conducteur selon l'une quelconque des revendications précédentes,
**caractérisé en ce qu'**
au moins un moyen (11, 12), notamment une résistance piézorésistive (11, 12) ou un élément de chauffage, permettant de détecter et/ou d'induire un gauchissement de la membrane (22), est prévu au moins partiellement sur ou dans la couche de couverture (19).

10. Elément semi-conducteur selon l'une quelconque des revendications précédentes,
**caractérisé en ce que**
la membrane (22) est isolée électriquement de la couche de base (18) ou au moins partiellement de la zone de la surface de la couche de base (18) limitant l'espace creux (23) à l'opposé de la membrane (22).

11. Elément semi-conducteur selon l'une quelconque des revendications précédentes,
**caractérisé en ce que**
la membrane (22) et la couche de base (18) ou au moins la partie de la surface de la couche de base (18) limitant l'espace creux (23) à l'opposé de la membrane (22), sont des conducteurs électriques comparativement bons par rapport aux zones de la couche de couverture (19) non logées par la zone conductrice (20, 21, 24).

12. Elément semi-conducteur selon l'une quelconque des
revendications précédentes,
**caractérisé en ce que**
des moyens permettent d'appliquer une tension électrique prédéfinie et/ou variablement réglable à la surface de la membrane (22) tournée vers l'espace creux (23) et à la partie de la surface de la couche de base (18) à l'opposé de la membrane (22), ou de mesurer le temps comme fonction, et/ou des moyens permettent d'alimenter électriquement avec une tension prédéfmlssable, et/ou réglable variablement, au moins la zone de la surface de la couche de base (18) limitant l'espace creux (23) à l'opposé de la membrane (22), ou de mesurer une tension électrique qui y est appliquée comme fonction du temps.

13. Elément semi-conducteur selon l'une quelconque des revendications précédentes,
**caractérisé en ce que**
des modules électroniques permettent de réaliser une mesure notamment statique de la capacité entre la surface de la membrane (22) tournée vers l'espace creux (23) et la partie de la surface de la couche de base (18) opposée à la membrane (22).

14. Elément semi-conducteur selon l'une quelconque des revendications précédentes,
**caractérisé en ce que**
des modules électroniques permettent de détecter un court-circuit électrique entre la surface de la membrane (22) tournée vers l'espace creux (23) et la partie de la surface de la couche de base (18) limitant l'espace creux (23), opposée à la membrane (22).

15. Elément semi-conducteur selon l'une quelconque des revendications précédentes,
**caractérisé en ce que**
des modules électroniques permettent de décaler la membrane (22) dans une oscillation, notamment une oscillation de résonance, à l'aide d'une excitation capacitive, et des modules électroniques permettent de définir cette oscillation à l'aide d'une analyse, notamment une mesure de la fréquence de résonance et/ou la qualité de l'oscillation de résonance, les propriétés mécaniques de la membrane (22), notamment sa mobilité par rapport à l'espace creux (23) ou la présence ou la position de points d'appui dans l'espace creux (23), et/ou son module d'élasticité et/ou son allongement ou son épaisseur latéral(e).

16. Elément semi-conducteur selon l'une quelconque des revendications précédentes,
**caractérisé en ce que**
la couche de couverture (19), la couche de base (18), la membrane (22) et la couche de bord (15) sont en silicium, notamment en silicium dopé de manière différente et adaptée.
